# EUROPÄISCHE PATENTSCHRIFT

(11) **EP 0 500 846 B1**
(45) Veröffentlichungstag und Bekanntmachung des Hinweises auf die Patenterteilung: **28.06.1995**
(21) Anmeldenummer: 91914965.8
(22) Anmeldetag: 03.09.1991
(51) Int. Cl.: H04B 7/015

(54) **VERFAHREN ZUR ERKENNUNG DER FREQUENZABLAGE BEI DIGITALEN NACHRICHTENÜBERTRAGUNGEN**
METHOD OF DETERMINING THE FREQUENCY DEVIATION IN DIGITAL COMMUNICATIONS TRANSMISSIONS
PROCEDE DE RECONNAISSANCE DE LA DERIVE DE LA FREQUENCE LORS DE LA TRANSMISSION NUMERIQUE D'INFORMATION

(30) Priorität: 07.09.1990 DE 4028369; 20.08.1991 DE 4127501
(43) Veröffentlichungstag der Anmeldung: 02.09.1992
(73) Patentinhaber: Daimler-Benz Aerospace Aktiengesellschaft, 81663 München (DE)
(72) Erfinder: ESPRESTER, Ralf, Dr., D-7909 Dornstadt (DE); ROSCHMANN, Hansjörg, D-7910 Neu-Ulm (DE); THEISGES, Walter, D-7901 Westerstetten (DE); ZOBERBIER, Manfred, D-7900 Ulm-Jungingen (DE); BRAKEMEIER, Achim, D-7900 Ulm (DE); LINDNER, Jürgen, D-7904 Erbach (DE)
(74) Vertreter: Schulze, Harald Rudolf, Dipl.-Ing.
(86) Internationale Anmeldenummer: EP9101661
(87) Internationale Veröffentlichungsnummer: WO9204783

(56) Entgegenhaltungen:
- EP-A- 0 164 108
- EP-A- 0 387 720
- DE-A- 2 822 874
- GB-A- 2 161 344

## Beschreibung

Die Erfindung betrifft ein Verfahren zur Erkennung der Frequenzlage bei digitalen Nachrichtenübertragungen nach dem Oberbegriff des Anspruchs 1, wie es aus der DE-C2-28 22 874 bekannt ist.

Das bekannte Verfahren wird insbesondere eingesetzt für die serielle Schnelltelegraphie im Kurzwellenbereich. Auf dem Übertragungsweg erfolgen starke lineare Verzerrungen, Phasendrehungen und Frequenzversätze der Signale. Das Empfangssignal ist meist ein Gemisch aus mehreren "Echos". Daher müssen im Empfänger alle diese Effekte erkannt und zur Entzerrung des Signals benutzt werden. Das bekannte Verfahren benutzt als Präambel der einzelnen Datenblöcke eine mehrfach wiederholte PN-Folge (PN = Pseudo Noise, also Pseudo-Rauschfolge), von vorzugsweise 31 Bit Länge. Die Präambel wird empfangsseitig mittels Transversalfiltern im Quadraturverfahren komprimiert. Präambel und Datenblöcke werden getrennt verarbeitet, und zwar werden aus der Untersuchung der Präambel Filtereinstellungen gewonnen, die im Datenpfad zur Echo-Entzerrung benutzt werden.

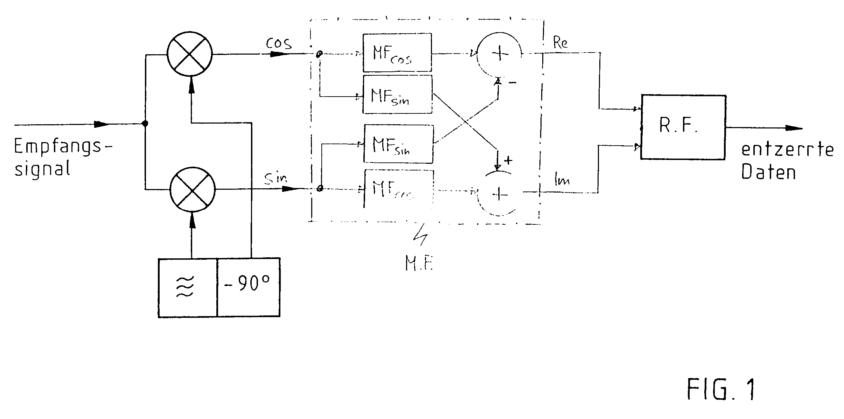

FIG. 1 zeigt die bekannte Anordnung zur (Quadratur"-)Demodulation des übertragenen geträgerten Signals auf der Empfangsseite. Die Anordnung entspricht derjenigen eines kohärenten Empfängers. Die Entzerrung erfolgt im Basisband. Für die "Quadratur"-Demodulation sind zwei Kanäle - ein Sinus- und ein Cosinuskanal - erforderlich, in denen das linear verzerrte geträgerte Empfangssignal mit einem von einem Überlagerungsoszillator bereitgestellten Trägersignal in einem Fall direkt und im anderen Fall nach einer Phasenverschiebung des Trägers um 90° multiplikativ gemischt wird. Da also zwei Kanäle (der Sinus- und der Cosinuskanal) im Echoentzerrer-Prozessor verarbeitet werden müssen, ist auch die Impulsantwort in beiden Kanälen zu bestimmen. Um die gesamte in einem Kanal vorhandene Energie des Nutzsignals nutzen zu können, ist im Sinus- und im Cosinuskanal ein zum jeweiligen Kanal zeitinverses Filter, ein sogenanntes Matched-Filter M. F., enthalten, das als Transversalfilteranordnung ausgebildet ist. Die Gewichte der Transversalfilter entsprechen der zeitinversen Impulsantwort der beiden Kanäle. Durch diese Matched-Filter wird eine nichtlineare Quadrierung vermieden (das Verfahren soll ja linear sein). Die Transversalfilterausgänge im Matched-Filter werden mittels Addierer so zusammengeschaltet, daß zwei Ausgangssignale entstehen, die einem reziproken Filter R. F. zugeführt werden (Quadratur-Tiefpaß-Entzerrer). Am Ausgang des reziproken Filters stehen die entzerrten Daten zur Verfügung.

Anstelle der hier verwendeten Zweiseitenbandmodulation kann auch die Restseitenbandmodulation verwendet werden. Bei diesem Modulationsverfahren kann die Auswertung der Signale im reziproken Filter auf das Ausgangssignal des Cosinus-Zweiges des Matched-Filters, d.h. auf den Realteil des komplexen Signals beschränkt werden.

Die Transversalfilteranordnung im Matched-Filter kann für diesen Fall entsprechend vereinfacht werden.

Die Frequenz-Differenz (Frequenzablage) zwischen Empfangssignal und Empfänger kann bis zu 60 Hz erreichen, da die Frequenznormal-Genauigkeit in einfachen Sende- und Empfangsgeräten bei etwa 10⁻⁶ liegt und der Frequenzbereich bis 30 MHz reicht.

Bei 3 000 Bd Schrittgeschwindigkeit dauert eine 31 Bit PN-Folge T_{PN} = 31/V_{T} = 10,3 msec, wobei T_{PN} die Dauer der PN-Folge und V_{T} die Schrittgeschwindigkeit (Baudrate) ist. Mit einfachen Korrelationstechniken, das ist Impulskompression mit Hilfe eines Transversalfilters, dessen Gewichte (+und -Einsen) zur PN-Folge zeitinvers sind (Matched-Filter im Zeitbereich, Sinus- und Cosinuskanal), kommt man mit einer Frequenzdifferenz zurecht, die einer 90°-Drehung für die Folgelänge entspricht. Bei 10 msec sind das etwa 25 Hz. Ist die Frequenzdifferenz höher, kommt es wegen der sogenannten Ambiguity-Funktion zu erheblicher Reduktion der Kompressions-Überhöhung am Ausgang des Korrelationsfilters.

Aufgabe der Erfindung ist es, ein Verfahren der eingangs genannten Art anzugeben, welches auf einfache Weise eine Erkennung der groben Frequenzablage ermöglicht.

Die Lösung dieser Aufgabe ist im kennzeichnenden Teil des Patentanspruchs 1 beschrieben. Die weiteren Ansprüche beinhalten vorteilhafte Weiterbildungen und Ausführungsarten des erfindungsgemäßen Verfahrens.

Ein Verfahren zur Erkennung der Frequenzablage bei digitalen Nachrichtenübertragungen mit Echoausbreitung, insbesondere im Kurzwellenbereich, bei welchem jeder Datenblock eine Präambel aus einer mehrfach wiederholten PN-Folge enthält, die empfangsseitig mittels Transversalfilter komprimiert wird, deren Gewichte entsprechend den Bitwerten der zeitinversen vollständigen PN-Folge gewählt sind, wird nach der Erfindung dahingehend verbessert:
- daß die Präambel empfangsseitig mehreren simultanen Dopplerkanälen zugeführt wird, von denen ein erster Dopplerkanal gegenüber der Empfangsfrequenz nicht frequenzversetzt ist und die übrigen Dopplerkanäle paarweise gegenüber der Empfangsfrequenz um einen positiven bzw. negativen Betrag frequenzversetzt sind,
- daß die Präambel in allen Dopplerkanälen mittels der Transversalfilter komprimiert wird und in ein Quadratursignal zusammengefaßt wird, und
- daß zur Bestimmung der Frequenzablage der Dopplerkanal mit den größten Amplituden im Quadratursignal ausgewählt wird.

Ein wesentlicher Vorteil dieser Lösung besteht darin, daß die grobe Frequenzablage der übertragenen digitalen Signale sehr einfach und sehr schnell erkannt werden kann.

In einer vorteilhaften Weiterbildung des erfindungsgemäßen Verfahrens ist vorgesehen, daß die größten Amplituden im Quadratursignal erst nach einer Mittelwertbildung der maximal erwarteten Kanalstoßantwortdauer bestimmt werden.

Mit dieser Maßnahme wird die Quote der richtig erkannten Signale bei der Signalerkennung erheblich erhöht.

Besonders gute Ergebnisse bei der Signalerkennung werden erzielt, wenn der Frequenzversatz Δf zwischen den Dopplerkanälen gleich oder zumindest im wesentlichen gleich ist dem Inversen der doppelten PN-Folge-Dauer T_{PN} und vorzugsweise etwa ± 50 Hz beträgt.

Zur genaueren Bestimmung der Frequenzablage mittels der Phasendrehung von PN-Folge zu PN-Folge werden zweckmäßigerweise die stärksten Kompressions-Signalwerte im Dopplerkanal mit den größten Amplituden herangezogen.

Zur Mustererkennung der komprimierten Präambel werden vorteilhafterweise die Quadratursignale auf Ähnlichkeit von PN-Intervall zu PN-Intervall untersucht.

Die Untersuchung auf Ähnlichkeit kann dabei z.B. durch Kreuzkorrelation zwischen einem PN-Intervall und dem vorangegangenen zwischengespeicherten PN-Intervall oder durch Amplitudenvergleiche zwischen den aufeinanderfolgenden PN-Intervallen erfolgen, wobei im letzteren Fall zweckmäßigerweise Mittelwerte über mehrere Signalamplituden jeweils im Abstand der PN-Intervalle gebildet werden und die mittlere Ähnlichkeit dieser Mittelwerte bewertet wird.

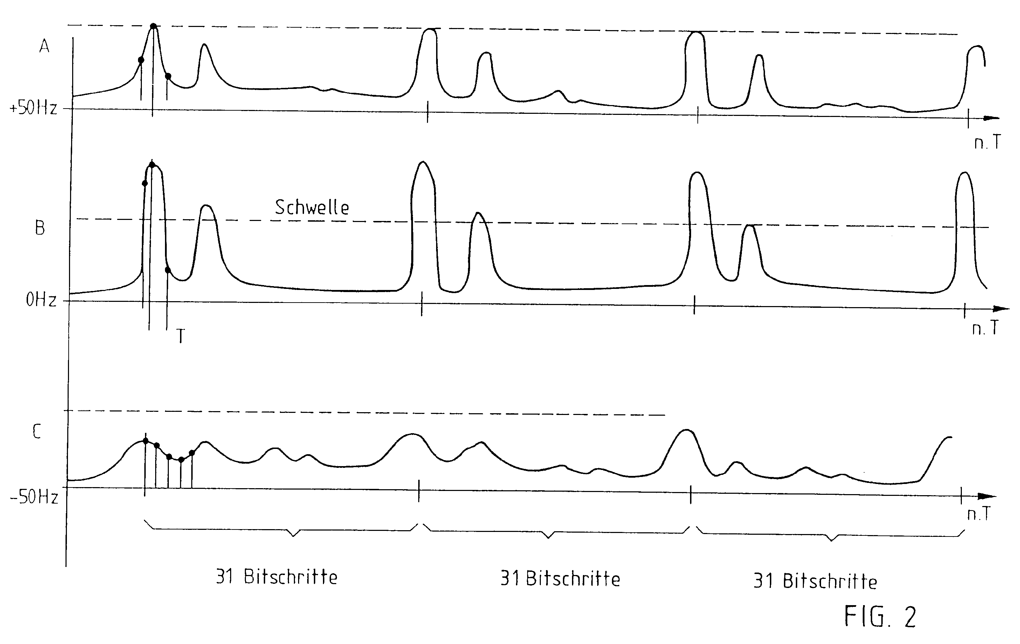

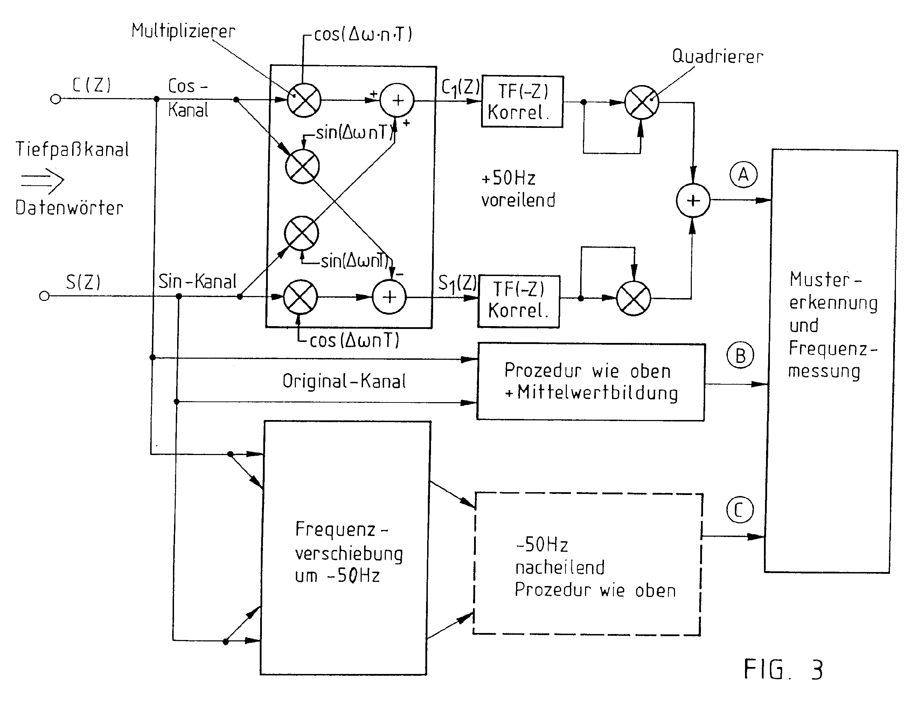

Die Erfindung wird im folgenden anhand der FIG. 2 und 3 näher erläutert.

Die heute zur Verfügung stehenden Rechenleistungen von digitalen Signalprozessoren (DSP) erreicht 10 Millionen Instruktionen/Operationen pro Sekunde bei einem single chip Prozessor. Das ist in Ausführung des erfindungsgemäßen Verfahrens für eine Echtzeitverarbeitung in mehreren frequenzversetzten, simultanen Dopplerkanälen ausreichend. Diese simultanen Dopplerkanäle erhalten vorzugsweise einen Frequenzabstand Δf von jenem doppelten Wert, der der 90°-Drehung entspricht (Δf=1/2T_{PN}). Somit sind es bei 3 000 Bd zweimal 25 Hz, also 50 Hz. Mit beispielsweise insgesamt drei solcher Dopplerkanälen erzielt man einen eindeutigen Signal-Erkennungs- und Meßbereich von theoretisch immerhin plus/minus 3 x 25 Hz, also 75 Hz. In jedem der Dopplerkanäle werden die empfangenen Signale korreliert, und zwar simultan, also insgesamt sechs Matched-Filter zur PN-Folge erzeugt. Die beiden Ausgangssignale der Korrelatoren jedes Dopplerkanals werden anschließend quadriert und addiert (Quadratursignal).

FIG. 2 zeigt anhand eines Beispiels mit drei Dopplerkanälen schematisch die Impulsantworten einer 31-Bit PN-Folge in den drei Dopplerkanälen, bei einer angenommenen Frequenzablage von + 10 Hz zum Empfänger. Kanal B ist der Originalkanal (kein Frequenzversatz), Kanal A ist dagegen um + 50 Hz, Kanal C um - 50 Hz frequenzversetzt. Es ist eine Ausbreitung auf zwei Pfaden mit unterschiedlicher Amplitude angenommen. Mit T ist eine Bitlänge bezeichnet. Die grobe Frequenzablage des Empfangssignal gegenüber dem Empfänger bestimmt der digitale Signalprozessor durch Auswahl des Dopplerkanals mit der größten Amplitude im Quadratursignal, in FIG. 2 also den Kanal B. Die Schwelle ist durch Erprobung festzulegen.

Aus diesem Kanal werden dann die stärksten Signalwerte herangezogen zur Bestimmung der genauen Frequenzablage aus der Phasendrehung von PN-Folge zu PN-Folge. Näheres dazu ist z. B. der DE-C2-28 22 874 zu entnehmen.

Die Dopplerkanäle von ± 50 Hz Verstimmung erzeugt man im Tiefpaß-Kanal (Sinus- und Cosinuskanal) mit der Methode von Manske (Manske, R.A.: Computer Simulation of Narrowband Systems. IEEE Trans. Comp. Vol. C-17, No 4 April, 1968, S.301-308).

FIG. 3 zeigt ein Blockschaltbild für drei derartige Dopplerkanäle. Es ist nur Kanal A ausführlich dargestellt. Die Verschiebungsprozedur nach Manske besteht in einer kreuzweisen Verknüpfung von Sinus- und Cosinus-Kanal in vier Multiplikations- und zwei Additionsoperationen. In Kanal B entfällt dieser Teil, in Kanal C ist die Anordnung entsprechend wie in A, mit negativem Δω. Alle drei Kanäle weisen jeweils zwei Matched-Filter TF (-z) auf.

Der Artikel von R. ESPRESTER. "Testfolgen zur Bestimmung der Kanalantwort bei Funkübertragung", erschienen im Mikrowellenmagazin Nr.5 (1988), beschreibt ein komprimierendes Digitalfilter in Zeitinverser Anordnung (matched filter).

Die Ausgangssignale der beiden Matched-Filter eines Dopplerkanals müssen entsprechend dem Quadraturverfahren (Quadrieren, Addieren) zusammengefaßt und mit Hilfe eines Mustererkennungsprozesses analysiert werden. Charakteristisch für diesen Prozeß ist die Tatsache, daß sich entsprechend den periodisch wiederholten PN-Folgen die Quadraturausgangssignale der drei Dopplerkanäle ebenfalls alle 31 Bit-Schritt-Intervalle wiederholen müssen. Einzig Störungssignale (z. B. Kanalgeräusch) und ionosphärische Instabilität überlagern sich diesem periodischen Vorgang und verfälschen diesen.

Ein vorteilhafter Muster-Erkennungsprozeß gemäß der Erfindung ist darauf abgestellt, eine Ähnlichkeit der alle 31 Schritte wiederholten Signalintervalle zu erkennen. Eine weitere wichtige Eigenschaft der Quadraturausgangssignale ist deren Amplituden-Überhöhung im Vergleich zum Empfangssignal vor der Korrelation (Matched-Filterung).

Die Sicherheit der Signalerkennung ist umso höher, je mehr PN-Folgen-Wiederholungen in der Präambel vorkommen. Die Ähnlichkeit des Quadratursignals kann erfindungsgemäß sowohl durch Amplitudenvergleich der aufeinanderfolgenden 31er-Bit-Intervalle als auch durch Kreuzkorrelationsprozesse ermittelt werden. Um die in praxi zu erwartenden Störeinflüsse zu berücksichtigen, läßt man eine geringe Abweichung vom vorausgehenden PN-Intervall zum nächsten 31-Bit-Intervall zu.

Die Kreuzkorrelation wird zwischen einem PN-Intervall und dem vorausgegangenen zwischengespeicherten PN-Intervall gebildet.

Beim Amplitudenvergleich können vorteilhafterweise auch Mittelwerte über mehrere (bei einer Präambel von 10 PN-Folgen z. B. über 5) Signalamplituden gebildet werden, jeweils im Abstand von 31 Bit, und die mittlere Ähnlichkeit dieser Signalamplituden bewertet werden, wobei stärkere Signalwerte bevorzugt gewichtet werden.

## Patentansprüche

1. Verfahren zur Erkennung der Frequenzablage bei digitalen Nachrichtenübertragungen mit Echoausbreitung, insbesondere im Kurzwellenbereich, bei welchem jeder Datenblock eine Präambel aus einer mehrfach wiederholten PN-Folge enthält, die empfangsseitig mittels Transversalfilter komprimiert wird, deren Gewichte entsprechend den Bitwerten der zeitinversen vollständigen PN-Folge gewählt sind, dadurch gekennzeichnet,
- daß die Präambel empfangsseitig mehreren simultanen Dopplerkanälen zugeführt wird, von denen ein erster Dopplerkanal gegenüber der Empfangsfrequenz nicht frequenzversetzt ist und die übrigen Dopplerkanäle paarweise gegenüber der Empfangsfrequenz um einen positiven bzw. negativen Betrag (Δf) frequenzversetzt sind,
- daß die Präambel in allen Dopplerkanälen mittels der Transversalfilter komprimiert wird und in ein Quadratursignal zusammengefaßt wird, und
- daß zur Bestimmung der Frequenzablage der Dopplerkanal mit den größten Amplituden im Quadratursignal ausgewählt wird.

2. Verfahren nach Anspruch 1, dadurch gekennzeichnet, daß empfangsseitig insgesamt drei simultane Dopplerkanäle vorgesehen sind, von denen zwei gegenüber der Empfangsfrequenz um den gleichen positiven bzw. negativen Betrag (Δf) frequenzverschoben sind.

3. Verfahren nach einem der Ansprüche 1 oder 2, dadurch gekennzeichnet, daß die größten Amplituden im Quadratursignal erst nach einer Mittelwertbildung über ein Zeitintervall entsprechend der maximal erwarteten Kanalstoßantwortdauer bestimmt werden.

4. Verfahren nach einem der vorhergehenden Ansprüche, dadurch gekennzeichnet, daß der Frequenzversatz (Δf) zwischen den Dopplerkanälen gleich oder zumindest im wesentlichen gleich ist dem Inversen der doppelten PN-Folge-Dauer T_{PN}.

5. Verfahren nach einem der vorhergehenden Ansprüche, dadurch gekennzeichnet, daß zur genaueren Bestimmung der Frequenzablage mittels der phasendrehung von PN-Folge zu PN-Folge die stärksten Kompressions-Signalwerte im Dopplerkanal mit den größten Amplituden herangezogen werden.

6. Verfahren nach einem der vorhergehenden Ansprüche, dadurch gekennzeichnet, daß zur Mustererkennung der komprimierten Präambel die Quadratursignale auf Ähnlichkeit von PN-Intervall zu PN-Intervall untersucht werden.

7. Verfahren nach Anspruch 6, dadurch gekennzeichnet, daß die Untersuchung auf Ähnlichkeit durch Kreuzkorrelation zwischen einem PN-Intervall und dem vorangegangenen zwischengespeicherten PN-Intervall erfolgt.

8. Verfahren nach Anspruch 6, dadurch gekennzeichnet, daß die Untersuchung auf Ähnlichkeit durch Amplitudenvergleiche zwischen den aufeinanderfolgenden PN-Intervallen erfolgt.

9. Verfahren nach Anspruch 8 dadurch gekennzeichnet, daß Mittelwerte über mehrere Signalamplituden jeweils im Abstand der PN-Intervalle gebildet werden und daß die mittlere Ähnlichkeit dieser Mittelwerte bewertet wird.

## Claims

1. Method for the recognition of the frequency deviation in digital communications transmissions with echo propagation, in particular in the shortwave range, in which each data block contains a preamble of a pseudo-noise sequence which is repeated several times and compressed at the receiving end by means of parallel filters, the weights of which are chosen in accordance with the bit values of the time-inverse complete pseudo-noise sequence, characterised thereby,
- that the preamble is fed at the receiving end to several simultaneous Doppler channels, of which a first Doppler channel is not shifted in frequency relative to the received frequency and the remaining Doppler channels are shifted in frequency relative to the received frequency in pairs of one by a positive and one by a negative amount (Δf),
- that the preamble is compressed in all Doppler channels by means of the parallel filters and
- that the Doppler channel with the greatest amplitudes in the quadrature signal is chosen for ascertaining the frequency deviation.

2. Method according to claim 1, characterised thereby, that altogether three simultaneous Doppler channels are provided at the receiving end, of which two are shifted in frequency relative to the received frequency by the same positive or negative amount (Δf).

3. Method according to one of the claims 1 and 2, characterised thereby, that the greatest amplitudes in the quadrature signal are ascertained only after a mean value formation over a time interval corresponding with the maximum expected channel pulse response duration.

4. Method according to one of the preceding claims, characterised thereby, that the frequency shift (Δf) between the Doppler channels is equal or at least substantially equal to the inverse of twice the pseudo-noise sequence duration T_{pN}.

5. Method according to one of the preceding claims, characterised thereby, that the strongest compression signal values in the Doppler channel with the greatest amplitudes are drawn upon for the more exact ascertaining of the frequency shift by means of the phase rotation from pseudo-noise sequence to pseudo-noise sequence.

6. Method according to one of the preceding claims, characterised thereby, that the quadrature signals are examined for similarity from pseudo-noise sequence to pseudo-noise sequence for the recognition of a pattern in the compressed preambles.

7. Method according to claim 6, characterised thereby, that the examination for similarity takes place through crosscorrelation between one pseudo-noise interval and the preceding intermediately stored pseudo-noise interval.

8. Method according to claim 6, characterised thereby, that the examination for similarity takes place by amplitude comparisons between the successive pseudo-noise intervals.

9. Method according to claim 8, characterised thereby, that mean values are formed over several signal amplitudes each time at the spacing of the pseudo-noise intervals and that the mean similarity of these mean values is evaluated.

## Revendications

1. Procédé pour détecter la déviation de fréquence lors de transmissions numériques d'information avec propagation d'échos, en particulier dans la bande des ondes décamétriques, selon lequel chaque bloc de données contient un préambule formé d'une séquence PN (séquence de pseudobruit) répétée plusieurs fois, préambule qui est comprimé, côté réception, au moyen de filtres transversaux dont les poids ont été choisis en conformité avec les valeurs binaires de la séquence PN complète, à inversion temporelle, caractérisé en ce
- que le préambule est amené, côté réception, à plusieurs canaux Doppler simultanés dont un premier canal n'est pas décalé en fréquence par rapport à la fréquence de réception et les autres canaux Doppler sont décalés en fréquence par paire, respectivement d'une valeur positive et d'une valeur négative (Δf), par rapport à la fréquence de réception,
- que le préambule est comprimé dans tous les canaux Doppler au moyen des filtres transversaux et rassemblé en un signal en quadrature, et
- que, pour déterminer la déviation de fréquence, le canal Doppler ayant les plus grandes amplitudes dans le signal en quadrature est sélectionné.

2. Procédé selon la revendication 1, caractérisé en ce qu'un total de trois canaux Doppler simultanés est prévu côté réception, dont deux canaux sont décalés en fréquence de la même valeur positive respectivement négative (Δf) par rapport à la fréquence de réception.

3. Procédé selon la revendication 1 ou 2, caractérisé en ce que les plus grandes amplitudes dans le signal en quadrature sont seulement déterminées après une formation de la valeur moyenne sur un intervalle de temps correspondant à la durée maximale attendue de la réponse par choc du canal.

4. Procédé selon une des revendications précédentes, caractérisé en ce que le décalage de fréquence (Δf) entre les canaux Doppler est égal ou tout au moins essentiellement égal à l'inverse de la double durée T_{PN} d'une séquence PN.

5. Procédé selon une des revendications précédentes, caractérisé en ce que, pour une détermination plus précise de la déviation de fréquence au moyen de la rotation de phase d'une séquence PN à la séquence PN suivante, on utilise les plus fortes valeurs de signal de compression dans le canal Doppler ayant les plus grandes amplitudes.

6. Procédé selon une des revendications précédentes, caractérisé en ce que, pour la reconnaissance de configuration du préambule comprimé, on examine les signaux en quadrature sur la ressemblance d'intervalle PN à intervalle PN.

7. Procédé selon la revendication 6, caractérisé en ce que l'examen ou l'analyse sur la ressemblance s'effectue par corrélation croisée entre un intervalle PN et l'intervalle PN précédent, mémorisé temporairement.

8. Procédé selon la revendication 6, caractérisé en ce que l'examen ou l'analyse sur la ressemblance s'effectue par des comparaisons d'amplitude entre des intervalles PN successifs.

9. Procédé selon la revendication 8, caractérisé en ce que des valeurs moyennes sont formées sur plusieurs amplitudes de signal, chaque fois avec l'espacement des intervalles PN, et que la ressemblance moyenne de ces valeurs moyennes est pondérée.
